(19) Europäisches Patentamt
European Patent Office
Office européen des brevets

(11) EP 2 917 264 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.04.2020 Patentblatt 2020/18**

(45) Hinweis auf die Patenterteilung:
**24.08.2016 Patentblatt 2016/34**

(21) Anmeldenummer: **13788740.2**

(22) Anmeldetag: **06.11.2013**

(51) Int Cl.:
***C08G 65/00*** *(2006.01)*

(86) Internationale Anmeldenummer:
**PCT/EP2013/073157**

(87) Internationale Veröffentlichungsnummer:
**WO 2014/072336 (15.05.2014 Gazette 2014/20)**

# (54) VERFAHREN ZUR HERSTELLUNG VON POLYETHERCARBONATPOLYOLEN

METHOD FOR MANUFACTURING POLYETHER CARBONATE POLYOLS

PROCÉDÉ DESTINÉ À LA FABRICATION DE POLYÉTHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012 EP 12192107**
**27.06.2013 EP 13174117**

(43) Veröffentlichungstag der Anmeldung:
**16.09.2015 Patentblatt 2015/38**

(73) Patentinhaber: **Covestro Deutschland AG**
**51373 Leverkusen (DE)**

(72) Erfinder:
- **HOFMANN, Jörg**
  **47800 Krefeld (DE)**
- **HAHN, Norbert**
  **41569 Rommerskirchen (DE)**

(74) Vertreter: **Levpat**
**c/o Covestro AG**
**Gebäude 4825**
**51365 Leverkusen (DE)**

(56) Entgegenhaltungen:
**WO-A1-2006/103214 WO-A1-2008/058913**
**WO-A1-2012/130760 WO-A1-2012/163944**
**US-A1- 2008 161 509**

Bemerkungen:
Die Akte enthält technische Angaben, die nach dem Eingang der Anmeldung eingereicht wurden und die nicht in dieser Patentschrift enthalten sind.

EP 2 917 264 B2

**Beschreibung**

Die vorliegende Erfindung betrifft ein Verfahren zur Herstellung von Polyethercarbonatpolyolen, die Polyethercarbonatpolyole erhältlich nach diesem Verfahren sowie deren Verarbeitung zur Herstellung von Polyurethan-Weichschaumstoffen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

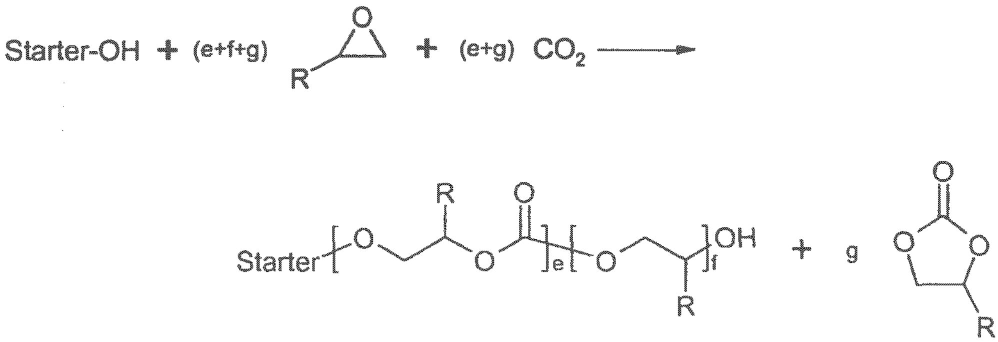

(I)

WO-A 2004/111107 offenbart ein Verfahren zur Herstellung von Polyetherpolyolen mit endständigen Ethylenoxid-Ketten mit DMC-Katalyse, bei dem nach Katalysatoraktivierung mit Propylenoxid eine Mischung aus Propylenoxid und Ethylenoxid mit stetig ansteigendem Anteil an Ethylenoxid ("Ramping") dosiert wird, dann das Restmonomer abreagiert wird und abschließend reines Ethylenoxid zugegeben wird.

WO-A 2001/044347 offenbart ein Verfahren zur DMC-katalysierten Herstellung von Polyetherpolyolen, bei dem eine gemeinsame Dosierung von mindestens zwei verschiedenen Epoxiden erfolgt, wobei während der gemeinsamen Dosierung das Mengenverhältnis der Epoxide zueinander im Gemisch verändert wird.

WO-A 2008/058913 offenbart ein Verfahren zur Herstellung von Polyurethan-Weichschaumstoffen unter Einsatz von mittels DMC-Katalyse hergestellten Polyethercarbonatpolyolen, wobei die Polyethercarbonatpolyole bevorzugt am Kettenende einen Block aus reinen Alkylenoxideinheiten, insbesondere reinen Propylenoxideinheiten aufweisen.

WO 2006/103214 A1 beschreibt ein Verfahren zur Herstellung von Polyethercarbonatpolyolen in Gegenwart eines Mulit-Metall-Cyanid-Katalysators, wobei die Polyethercarbonatpolyole unter die allgemeine Formel [A]a[B]b[C]c fallen, wobei A ein Polyethercarbonat-Segment, B ein Polycarbonatsegment und C ein Polyethersegment bedeutet und a eine Zahl von 1-98, b eine Zahl von 0-60 und c eine Zahl von 0-98 bedeuten kann, solange b und c nicht gleichzeitig 0 bedeuten.

WO 2012/130760 A1 beschreibt ein Verfahren zur Herstellung von Polyurethan-Weichschaumstoffen, wobei eine Isocyanatkomponente (Komponente B) eingesetzt wird, die Polyethercarbonatpolyol enthält, sowie die Isocyanatkomponente selbst. Ferner wird auch ein NCO-terminiertes urethangruppenhaltiges Prepolymer beschrieben, welches durch Umsetzung von ein oder mehreren Polyisocyanate (B1) mit ein oder mehreren Polyethercarbonatpoylol erhältlich ist.

Die europäische Patentanmeldung Nr. 11168433.8 offenbart ein Verfahren zur DMC-katalysierten Herstellung von Polyethercarbonatpolyolen mit einem Mischblock aus mindestens zwei verschiedenen Alkylenoxiden in einem molaren Verhältnis von 15/85 bis 60/40, sowie daraus erhältliche Polyurethan-Weichschaumstoffe.

Die aus dem Stand der Technik bekannten Polyethercarbonatpolyole haben den Nachteil, dass bei (anteiligem) Austausch eines Polyetherpolyols gegen ein Polyethercarbonatpolyol in einer Polyolformulierung für die Verarbeitung zu Polyurethan-Weichschaumstoffen die weiteren Bestandteile der Polyolformulierung (Additive) in Art und/oder Menge angepasst werden müssen, um eine einwandfreie Verarbeitbarkeit zu erreichen. Dies wird insbesondere bei der Verarbeitung der Polyethercarbonatpolyole zu Polyurethan-Weichschaumstoffen vom Typ Kaltschaumstoff (auch als high

resilience oder HR Schaumstoff bezeichnet) beobachtet. Wünschenswert ist es aber, das Polyetherpolyol zumindest teilweise durch ein Polyethercarbonatpolyol ersetzen zu können unter Beibehaltung der guten Verarbeitbarkeit, ohne dass die weiteren Bestandteile der Polyolformulierung (Additive) in Art und/oder Menge angepasst werden müssen.

Es war daher Aufgabe der vorliegenden Erfindung, ein Verfahren zur Herstellung von Polyethercarbonatpolyolen mit einer möglichst niedrigen Polydispersität sowie einer guten Verarbeitbarkeit zu Polyurethan-Weichschaumstoffen, insbesondere zu Polyurethan-Weichschaumstoffen vom Typ Kaltschaumstoff, bereitzustellen.

Überraschend wurde gefunden, dass die erfindungsgemäße Aufgabe gelöst wird durch ein Verfahren zur Herstellung von Polyethercarbonatpolyolen, dadurch gekennzeichnet, dass

(i) in einem ersten Schritt an einer oder mehreren H-funktionellen Startsubstanz(en) in Gegenwart mindestens eines DMC-Katalysators

(a) Kohlendioxid und Propylenoxid oder

angelagert werden,
(ii) in einem zweiten Schritt das aus Schritt (i) erhaltene Reaktionsgemisch

(ii-1) zunächst mit einer Mischung enthaltend Propylenoxid (PO) und Ethylenoxid (EO) in einem Gewichtsverhältnis PO/EO von 90/10 bis 20/80, bevorzugt von 80/20 bis 30/70, besonders bevorzugt von 75/25 bis 35/65 in Gegenwart mindestens eines DMC-Katalysators kettenverlängert wird, wobei der Schritt (ii-1) mit jeweils verschiedenem Gewichtsverhältnis PO/EO auch mehrfach erfolgen kann,
(ii-2) dann das resultierende Gemisch mit einer Mischung enthaltend Propylenoxid (PO) und Ethylenoxid (EO) in einem Gewichtsverhältnis PO/EO von 60/40 bis 2/98, bevorzugt von 40/60 bis 5/95, besonders bevorzugt von 30/70 bis 10/90 in Gegenwart mindestens eines DMC-Katalysators kettenverlängert wird, wobei der Schritt (ii-2) mit jeweils verschiedenem Gewichtsverhältnis PO/EO auch mehrfach erfolgen kann, und

(iii) das aus Schritt (ii) resultierende Polyethercarbonatpolyol mit Ethylenoxid oder einer Mischung aus Propylenoxid (PO) und Ethylenoxid (EO) in einem Gewichtsverhältnis PO/EO von 5/95 bis 0,1/99,9, bevorzugt Ethylenoxid, in Gegenwart mindestens eines DMC-Katalysators kettenverlängert wird.

wobei in Schritt (ii-2) der Gewichtsanteil des EO in der Mischung enthaltend PO und EO höher ist als der Gewichtsanteil des EO in der Mischung enthaltend PO und EO in Schritt (ii-1),

Weiterer Gegenstand der vorliegenden Erfindung ist ein Verfahren zur Herstellung von Polyurethan-Weichschaumstoffen, wobei als Ausgangsstoff eine Polyolkomponente (Komponente A) eingesetzt wird, die ein Polyethercarbonatpolyol enthält, welches erhältlich ist durch ein Verfahren, dadurch gekennzeichnet, dass

(i) in einem ersten Schritt an einer oder mehreren H-funktionellen Startsubstanz(en) in Gegenwart mindestens eines DMC-Katalysators

(a) Kohlendioxid und Propylenoxid oder

angelagert werden,
(ii) in einem zweiten Schritt das aus Schritt (i) erhaltene Reaktionsgemisch

(ii-1) zunächst mit einer Mischung enthaltend Propylenoxid (PO) und Ethylenoxid (EO) in einem Gewichtsverhältnis PO/EO von 90/10 bis 20/80, bevorzugt von 80/20 bis 30/70, besonders bevorzugt von 75/25 bis 35/65 in Gegenwart mindestens eines DMC-Katalysators kettenverlängert wird, wobei der Schritt (ii-1) mit jeweils verschiedenem Gewichtsverhältnis PO/EO auch mehrfach erfolgen kann,
(ii-2) dann das resultierende Gemisch mit einer Mischung enthaltend Propylenoxid (PO) und Ethylenoxid (EO) in einem Gewichtsverhältnis PO/EO von 60/40 bis 2/98, bevorzugt von 40/60 bis 5/95, besonders bevorzugt von 30/70 bis 10/90 in Gegenwart mindestens eines DMC-Katalysators kettenverlängert wird, wobei der Schritt (ii-2) mit jeweils verschiedenem Gewichtsverhältnis PO/EO auch mehrfach erfolgen kann, und

(iii) das aus Schritt (ii) resultierende Polyethercarbonatpolyol mit Ethylenoxid oder einer Mischung aus Propylenoxid (PO) und Ethylenoxid (EO) in einem Gewichtsverhältnis PO/EO von 5/95 bis 0,1/99,9, bevorzugt Ethylenoxid, in Gegenwart mindestens eines DMC-Katalysators kettenverlängert wird,

wobei in Schritt (ii-2) der Gewichtsanteil des EO in der Mischung enthaltend PO und EO höher ist als der Gewichtsanteil

des EO in der Mischung enthaltend PO und EO in Schritt (ii-1),

Die erfindungsgemäßen Polyurethan-Weichschaumstoffe weisen vorzugsweise eine Rohdichte gemäß DIN EN ISO 3386-1-98 im Bereich von ≥ 10 $kg/m^3$ bis ≤ 150 $kg/m^3$, vorzugsweise von ≥ 20 $kg/m^3$ bis ≤ 70 $kg/m^3$ auf und vorzugsweise liegt deren Stauchhärte gemäß DIN EN ISO 3386-1-98 im Bereich von ≥ 0,5 kPa bis ≤ 20 kPa (bei 40% Verformung und 4. Zyklus).

**Schritt (i):**

Die Anlagerung der ein oder mehreren Alkylenoxide und Kohlendioxid in Gegenwart mindestens eines DMC-Katalysators an eine oder mehrere H-funktionelle Startsubstanz(en) ("Copolymerisation") führt zu einem Reaktionsgemisch enthaltend das Polyethercarbonatpolyol und gegebenenfalls cyclisches Carbonat (vgl. Schema (I), beispielsweise entsteht im Falle der Anlagerung von Propylenoxid (R = $CH_3$) somit Propylencarbonat).

Beispielsweise ist das Verfahren gemäß Schritt (i) dadurch gekennzeichnet, dass

(α) die H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen oder dem Suspensionsmittel vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxid) an Alkylenoxid ausgewählt aus der Gruppe bestehend aus

(a) Propylenoxid und

zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) Propylenoxid, Kohlendioxid und gegebenenfalls eine oder mehrere H-funktionelle Startersubstanz(en) zu der aus Schritt (β) resultierenden Mischung zugesetzt werden,

wobei wenigstens in einem der Schritte (α) oder (γ) mindestens eine H-funktionelle Startersubstanz zugesetzt wird.

Die gegebenenfalls eingesetzten **Suspensionsmittel** enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehrerer dieser Suspensionsmittel eingesetzt werden. Beispielhaft seien an dieser Stelle folgende polar-aprotischen Suspensionsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Suspensionsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Für das erfindungsgemäße Verfahren wird in Schritt (i) Propylenoxid als Alkylenoxid eingesetzt.

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als mono-H-funktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahrensschritt (i) erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol,

1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

Zu Schritt (α):

Vorzugsweise wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden, oder es können auch in Schritt (α) eine Teilmenge der H-funktionellen Startersubstanz(en) sowie gegebenenfalls DMC-Katalysator im Reaktor vorgelegt werden. Weiterhin können auch in Schritt (α) die Gesamtmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im gemäß Schritt (i) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in das resultierende Gemisch aus DMC-Katalysator mit Suspensionsmittel und/oder H-funktioneller Startersubstanz bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder H-funktioneller Startersubstanz bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann beispielsweise in fester Form oder als Suspension in einem oder mehreren Suspensionsmittel(n) oder als Suspension in einer oder mehreren H-funktionellen Startersubstanz(en) zugegeben werden.

In einer weiteren bevorzugten Ausführungsform wird in Schritt (α)

(α-I) Suspensionsmittel und/oder eine Teilmenge oder die Gesamtmenge an H-funktioneller Startersubstanz vorgelegt und

(α-II) die Temperatur des Suspensionsmittels und/oder der H-funktionellen Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel und/oder zur H-funktionellen Startersubstanz in Schritt (α-I) oder unmittelbar anschließend in Schritt (α-II) zugesetzt wird, und wobei das Suspensionsmittel keine H-funktionellen Gruppen enthält.

Zu Schritt (β):

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Propylenoxid bei Temperaturen von 90 bis 150°C zur DMC-Katalysator-Suspension zugegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von CO2, zum DMC-Katalysator bis zum Auftreten der Wärmeentwicklung. Gegebenenfalls kann die Teilmenge Alkylenoxidverbindung in mehreren Einzelschritten, gegebenenfalls in Gegenwart von CO2, zum DMC-Katalysator gegeben werden und dann jeweils die Zugabe der Alkylenoxidverbindung unterbrochen werden. Im diesem Fall umfasst der Verfahrensschritt der Aktivierung die Zeitspanne von der Zugabe der ersten Teilmenge an Alkylenoxidverbindung, gegebenenfalls in Gegenwart von CO2, zum DMC-Katalysator bis zum Auftreten der Wärmeentwicklung nach Zugabe der letzten Teilmenge an Alkylenoxidverbindung. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel und/oder H-funktioneller Startersubstanz). Das Alkylenoxid kann in einem Schritt oder portionsweise in mehreren Teilmengen zugegeben werden. Bevorzugt wird nach Zugabe einer Teilmenge Alkylenoxidverbindung die Zugabe der Alkylenoxidverbindung bis zum Auftreten der Wärmeentwicklung unterbrochen und erst dann die nächste Teilmenge an Alkylenoxidverbindung zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

<u>Zu Schritt (γ):</u>

Für das erfindungsgemäße Verfahren hat sich gezeigt, dass Schritt (γ) vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion unter Bildung eines Polyethercarbonatpolyols nur sehr langsam ab. Bei Temperaturen oberhalb von 150°C steigt die Menge an unerwünschten Nebenprodukten stark an.

Die Dosierung der Alkylenoxide ausgewählt aus der Gruppe bestehend aus (a) Propylenoxid und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des Alkylenoxids bzw. das $CO_2$ erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid Portionsweise zuzugeben. Bevorzugt wird das Alkylenoxid mit konstanter Dosierrate dem Reaktionsgemisch zugegeben. Über die Art und/oder Reihenfolge der Dosierung des Alkylenoxids und/oder des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Bei einem Verfahren mit Dosierung einer oder mehrerer H-funktioneller Startersubstanz(en) in Schritt (γ) kann die Dosierung einer oder mehrerer H-funktioneller Startersubstanz(en), des Alkylenoxids und gege-benenfalls auch des Kohlendioxids simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxid auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate

oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des Alkylenoxids und/oder der einen oder mehreren H-funktionellen Startersubstanz(en) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Über die Art und/oder Reihenfolge der Dosierung der H-funktionellen Startersubstanzen, des Alkylenoxids und/oder des Kohlendioxids ist es möglich, statistische, alternierende, blockartige oder gradientenartige Polyethercarbonatpolyole zu syn¬thetisieren.

In einer bevorzugten Ausführungsform wird in Schritt (γ) die Dosierung der einen oder mehreren H-funktionellen Startersubstanz(en) zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell das Alkylenoxid verbraucht wird und ob das Produkt gegebenenfalls $CO_2$-freie Polyether-Blöcke enthalten soll. Die Menge des Kohlendioxids (angegeben als Druck) kann bei der Zugabe des Alkylenoxids ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der einen oder mehreren H-funktionellen Startersubstanz(en) zugegeben wird, also in Schritt (α) ein Suspensionsmittel eingesetzt wird.

Diese Zugabe kann mit einer konstanten Dosierrate, mit einer variierenden Dosierrate oder portionsweise erfolgen.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst. Gegenstand der Erfindung ist daher auch ein Verfahren, wobei in Schritt (γ) eine oder mehrere H-funktionelle Startersubstanz(en), das Propylenoxid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator, welcher in H-funktioneller Startersubstanz suspendiert wurde, kontinuierlich zugegeben. Die Dosierung des Alkylenoxids, der H-funktionellen Startersubstanz und des DMC-Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der einen oder mehreren H-funktionellen Startersubstanz(en) kann als kontinuierliche Zudosierung in den Reaktor oder portionsweise erfolgen.

Beispielsweise wird für das kontinuierliche Verfahren zur Herstellung der Polyethercarbonatpolyole gemäß den Schritten (α) und (β) eine aktivierte DMC-Katalysator-Suspensionsmittel-Mischung hergestellt, dann werden gemäß Schritt (γ)

(γ1) jeweils eine Teilmenge an einer oder mehreren H-funktionelle Startersubstanz(en), einem Alkylenoxid und Kohlendioxid zudosiert zum Initiieren der Copolymerisation, und

(γ2) während des Fortschreitens der Copolymerisation jeweils die verbleibende Menge an DMC-Katalysator, einer oder mehreren Startersubstanz(en) und Alky¬lenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Die Schritte (α), (β) und (γ) können in einem Rührkessel durchgeführt werden, wobei der Rührkessel je nach Ausführungsform und Betriebsweise über den Reaktormantel, innen liegende und/oder in einem Umpumpkreislauf befindliche Kühlflächen gekühlt wird. Sowohl im Semi-batch-Verfahren, bei der das Produkt erst nach Ende der Reaktion entnommen wird, als auch im kontinuierlichen Verfahren, bei der das Produkt kontinuierlich entnommen wird, ist besonders auf die Dosiergeschwindigkeit des Alkylenoxids zu achten. Sie ist so einzustellen, dass trotz der inhibierenden

Wirkung des Kohlendioxids das Alkylenoxid genügend schnell abreagiert.

In einer bevorzugten Ausführungsform wird die gemäß den Schritten (α) und (β) resultierende aktivierte DMC-Katalysator enthaltende Mischung in demselben Reaktor weiter mit einem Alkylenoxid, einer oder mehreren Startersubstanz(en) und Kohlendioxid umgesetzt. In einer weiteren bevorzugten Ausführungsform wird die gemäß den Schritten (α) und (β) resultierende aktivierte DMC-Katalysator enthaltende Mischung in einem anderen Reaktionsbehältnis (beispielsweise einem Rührkessel, Rohrreaktor oder Schlaufenreaktor) weiter mit Alkylenoxid, einer oder mehreren Startersubstanz(en) und Kohlendioxid umgesetzt.

Bei Reaktionsführung in einem Rohrreaktor wird die gemäß den Schritten (α) und (β) resultierende aktivierte DMC-Katalysator enthaltende Mischung, eine oder mehrere H-funktionelle Startersubstanz(en), ein Alkylenoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Durchführung der Schritte (α), (β) und (γ) verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Das Verfahren gemäß Schritt (i) kann auch so geführt werden, dass anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird. Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht aktivierter DMC-Katalysator in fester Form oder in Form einer Aufschlämmung in einer Star¬tersubstanz oder Suspensionsmittel definiert. Die Fähigkeit des vorliegenden Verfahrens zur Verwendung von fri¬schem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Ma¬terialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Rea¬ktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Gegebenenfalls werden aus dem gemäß Schritt (i) resultierenden Reaktionsgemisch leicht flüchtige Bestandteile (wie beispielsweise Restmengen an Alkylenoxiden, Nebenprodukte oder Suspensionsmittel) entfernt, beispielsweise durch Destillation unter vermindertem Druck oder durch Dünnschichtverdampfung.

**Schritt (ii):**

Beispielsweise können die Schritte (ii-1) und/oder (ii-2) zwei- bis zehnmal wiederholt werden, wobei in einer bevorzugten Ausführungsform eine Mischung enthaltend Propylenoxid (PO) und Ethylenoxid (EO) eingesetzt wird, wobei bei jeder Wiederholung der Gewichtsanteil des EO zunimmt. In einer besonders bevorzugten Ausführungsform der Erfindung wird der Gewichtsanteil des EO in der Mischung aus PO und EO zwischen einem Anfangsmischungsverhältnis PO/EO und einem Endmischungsverhältnis PO/EO kontinuierlich gesteigert, wobei das Anfangsmischungsverhältnis PO/EO einem Gewichtsverhältnis PO/EO aus dem für Schritt (ii-1) definierten Gewichtsverhältnis entspricht, und das Endmischungsverhältnis PO/EO einem Gewichtsverhältnis PO/EO aus dem für Schritt (ii-2) definierten Gewichtsverhältnis entspricht.

Die mittlere Länge der gemäß Schritt (ii-1) bzw. (ii-2) hergestellten Mischblöcke aus PO und EO beträgt bevorzugt 1,0 bis 20,0 Alkylenoxid-Einheiten, besonders bevorzugt 1,5 bis 10,0 Alkylenoxid-Einheiten, jeweils bezogen auf eine OH-Gruppe des Polyethercarbonatpolyols.

Gegebenenfalls wird zur Durchführung des Schrittes (ii) in das aus Schritt (i) resultierende Gemisch bei einer Temperatur von 90 bis 150°C, besonders bevorzugt von 100 bis 140°C Inertgas (beispielsweise Argon oder Stickstoff) eingeleitet und gleichzeitig ein reduzierter Druck (absolut) angelegt, so dass sich im Reaktor ein Druck von 10 mbar bis 800 mbar, besonders bevorzugt von 50 mbar bis 200 mbar einstellt (nachfolgend auch als "Strippen" bezeichnet).

Gegebenenfalls kann zur Durchführung des Schrittes (ii) dem aus Schritt (i) erhaltenen Reaktionsgemisch DMC-Katalysator zugesetzt werden. Alternativ kann der Schritt (ii) auch nur mit dem DMC-Katalysator, der in dem Gemisch aus Schritt (i) enthalten ist, durchgeführt werden.

Zur Durchführung des Schrittes (ii) kann dem aus Schritt (i) erhaltenen Reaktionsgemisch ein Lösungsmittel, das keine H-funktionellen Gruppen enthält, zugesetzt wird.

Als **Lösungsmittel** sind vorzugsweise alle polar-aprotischen, schwach polar-aprotischen und unpolar-aprotischen Lösungsmittel geeignet, die jeweils keine H-funktionellen Gruppen enthalten. Als Lösungsmittel kann auch eine Mischung aus zwei oder mehreren dieser Lösungsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Lösungsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Lösungsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

**Schritt (iii):**

Gegebenenfalls kann zur Durchführung des Schrittes (iii) dem aus Schritt (ii) erhaltenen Reaktionsgemisch DMC-Katalysator zugesetzt werden. Alternativ kann der Schritt (iii) auch nur mit dem DMC-Katalysator, der in dem Gemisch aus Schritt (ii) enthalten ist, durchgeführt werden.

Zur Durchführung des Schrittes (iii) kann dem aus Schritt (ii) erhaltenen Reaktionsgemisch ein Lösungsmittel, das keine H-funktionellen Gruppen enthält, zugesetzt werden. Geeignete Lösungsmittel sind die unter Schritt (ii) genannten Lösungsmittel.

Nach Dosierung des Ethylenoxids oder der Mischung aus Ethylenoxid und Propylenoxid kann sich ein Nachreaktionsschritt anschließen, welcher der weitgehenden Abreaktion der Alkylenoxide dient.

Vorzugsweise werden aus dem gemäß Schritt (iii) resultierenden Reaktionsgemisch leicht flüchtige Bestandteile (wie beispielsweise Restmengen an Alkylenoxiden, Nebenprodukte oder Lösungsmittel) entfernt, beispielsweise durch Destillation unter vermindertem Druck oder durch Dünnschichtverdampfung.

Bevorzugt weisen die nach Schritt (iii) resultierenden Polyethercarbonatpolyole einen Anteil an primären OH-Gruppen von 40 bis 90 mol%, besonders bevorzugt von 45 bis 85 mol% auf.

Die mittlere Länge eines gemäß Schritt (iii) hergestellten Alkylenoxidblocks beträgt bevorzugt 1 bis 30 Alkylenoxid-Einheiten, besonders bevorzugt 1,5 bis 18 Alkylenoxid-Einheiten, jeweils bezogen auf eine OH-Gruppe des Polyethercarbonatpolyols.

Bevorzugt weisen die nach Schritt (iii) resultierenden Polyethercarbonatpolyole eine Hydroxylzahl von 20 mg KOH/g bis 80 mg KOH/g, besonders bevorzugt von 25 mg KOH/g bis 60 mg KOH/g auf.

Für die Schritte (ii) und (iii) hat sich gezeigt, dass diese vorteilhafterweise bei 50 bis 170°C, bevorzugt bei 70

bis 150°C, besonders bevorzugt bei 90 bis 140°C und ganz besonders bevorzugt bei 100 bis 130°C durchgeführt werden.

Die Schritte (ii) und (iii) können in demselben Reaktor oder jeweils separat in unterschiedlichen Reaktoren durchgeführt werden. Bevorzugte Reaktortypen sind: Rohrreaktoren, Rührkessel, Schlaufenreaktoren. Die Schritte (ii) und (iii) werden besonders bevorzugt in einem Rührkessel durchgeführt, wobei das Produkt nach Ende der Reaktion gemäß Schritt (iii) aus dem Rührkessel entnommen wird (Semi-batch-Verfahren). Höchst bevorzugt wird der Rührkessel je nach Ausführungsform und Betriebsweise über den Reaktormantel, innen liegende und/oder in einem Umpumpkreislauf befindliche Kühlflächen gekühlt.

**DMC-Katalysatoren** zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(a) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(b) wobei im zweiten Schritt der Feststoff aus der aus (i) erhaltenen Suspension durch bekannte Techniken (wie Zentrifugation oder Filtration) abgetrennt wird,

(ci) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VI)

$$(Y)_a M'(CN)_b (A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).
Bevorzugte Doppelmetallcyanid-Verbindungen, die in den erfindungsgemäßen DMC-Katalysatoren enthalten

sind, sind Verbindungen der allgemeinen Formel (VII)

$$M_x[M'_{x'},(CN)_y]_z \qquad (VII)$$

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch-und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

## Polyurethan-Weichschaumstoffe

Bevorzugter Gegenstand der Erfindung ist ein Verfahren zur Herstellung von Polyurethan-Weichschaumstoffen mit einer Rohdichte gemäß DIN EN ISO 3386-1-98 im Bereich von ≥ 10 $kg/m^3$ bis ≤ 150 $kg/m^3$, vorzugsweise von ≥ 20 $kg/m^3$ bis ≤ 70 $kg/m^3$ und einer Stauchhärte gemäß DIN EN ISO 3386-1-98 im Bereich von ≥ 0,5 kPa bis ≤ 20 kPa (bei 40% Verformung und 4. Zyklus) durch Umsetzung von
Komponente A (Polyolformulierung) enthaltend

A1 100 bis 10 Gew.-Teile, bevorzugt 100 bis 50 Gew.-Teile, besonders bevorzugt 100 Gew.-Teile (bezogen auf die Summe der Gew.-Teile der Komponenten A1 und A2) Polyethercarbonatpolyol erhältlich gemäß dem Verfahren der vorliegenden Erfindung,
A2 0 bis 90 Gew.-Teile, bevorzugt 0 bis 50 Gew.-Teile (bezogen auf die Summe der Gew.-Teile der Komponenten A1 und A2) konventionelles Polyetherpolyol, besonders bevorzugt ist die Komponente A frei von konventionellem Polyetherpolyol,
A3 0,5 bis 25 Gew.-Teile, bevorzugt 2 bis 5 Gew.-Teile (bezogen auf die Summe der Gew.-Teile der Komponenten A1 und A2) Wasser und/oder physikalische Treibmittel,
A4 0,05 bis 10 Gew.-Teile, bevorzugt 0,2 bis 4 Gew.-Teile (bezogen auf die Summe der Gew.-Teile der Komponenten A1 und A2) Hilfs- und Zusatzstoffe wie

a) Katalysatoren,
b) oberflächenaktive Zusatzstoffe,
c) Pigmente oder Flammschutzmittel,

A5 0 bis 10 Gew.-Teile, bevorzugt 0 bis 5 Gew.-Teile (bezogen auf die Summe der Gew.-Teile der Komponenten A1 und A2) gegenüber Isocyanaten reaktionsfähigen Wasserstoffatomen aufweisenden Verbindungen mit einem Molekulargewicht von 62 - 399,

mit Komponente B enthaltend Polyisocyanate,
wobei die Herstellung bei einer Kennzahl von 50 bis 250, bevorzugt 70 bis 130, besonders bevorzugt 75 bis 115 erfolgt, und wobei hierbei die Gewichtsteilangaben der Komponenten A1 bis A5 so normiert sind, dass die Summe der Gewichtsteile der Komponenten A1+A2 in der Zusammensetzung 100 ergibt.

Komponente A1

Die Herstellung der Komponente A1 gemäß den Schritten (i), (ii) und (iii) wurde bereits obenstehend im Zusammenhang mit dem Herstellverfahren der Polyethercarbonatpolyole erläutert.

Komponente A2

Ausgangskomponenten gemäß Komponente A2 sind konventionelle Polyetherpolyole. Unter konventionellen Polyetherpolyolen im Sinne der Erfindung werden Verbindungen bezeichnet, die Alkylenoxidadditionsprodukte von Starterverbindungen mit Zerewitinoff-aktiven Wasserstoffatomen, also Polyetherpolyole mit einer Hydroxylzahl gemäß DIN 53240 von ≥ 15 mg KOH/g bis ≤ 80 mg KOH/g, vorzugweise von ≥ 20 mg KOH/g bis ≤ 60 mg KOH/g sind.

Für die konventionellen Polyetherpolyole eingesetzte Starterverbindungen mit Zerewitinoff-aktiven Wasserstoffatomen weisen meist Funktionalitäten von 2 bis 6 auf, vorzugsweise von 3, und vorzugsweise sind die Starterverbindungen hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff,. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

α) Harnstoff, Derivate des Harnstoffs und/oder

β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

<u>Komponente A5</u>

Gegebenenfalls werden als Komponente A5 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A5 Ethanolamin, Diethanolamin, Triethanolamin, Sorbit und/oder Glycerin eingesetzt werden. Weitere Beispiele für Verbindungen gemäß Komponente A5 werden in EP-A 0 007 502, Seiten 16 - 17, beschrieben.

<u>Komponente B</u>

Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (VIII)

$$Q(NCO)_n, \qquad (VIII)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'- Diphenylmethandiisocyanat, 2,4'-Diphenylmethandiisocyanat und Polyphenylpolymethylenpolyisocyanat eingesetzt.

Zur Herstellung der Polyurethan-Weichschaumstoffe werde die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethan-Weichschaumstoffe können als Form- oder auch als Blockschaumstoffe hergestellt werden. Gegenstand der Erfindung sind daher ein Verfahren zur Herstellung der Polyurethan-Weichschaumstoffe, die nach diesen Verfahren hergestellten Polyurethan-Weichschaumstoffe, die nach diesen Verfahren hergestellten Polyurethanweichblockschaumstoffe bzw. Polyurethanweichformschaumstoffe, die Verwendung der Polyurethan-Weichschaumstoffe zur Herstellung von Formteilen sowie die Formteile selbst. Die nach der Erfindung erhältlichen Polyurethan-Weichschaumstoffe finden beispielsweise folgende Anwendung: Möbelpolsterungen, Textileinlagen, Matratzen, Automobilsitze, Kopfstützen, Armlehnen, Schwämme und Bauelementen.

Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an Isocyanat-Gruppen (NCO)-Menge an.

$$\text{Kennzahl} = [(\text{Isocyanat-Menge eingesetzt}) : (\text{Isocyanat-Menge berechnet})] \bullet 100 \qquad (IX)$$

## <u>Beispiele</u>

<u>Methoden:</u>

Die Rohdichte wurde gemäß DIN EN ISO 3386-1-98 bestimmt.
Die Stauchhärte wurde gemäß DIN EN ISO 3386-1-98 (bei 40% Verformung und 4. Zyklus) bestimmt.
Die Zugfestigkeit und Bruchdehnung wurden bestimmt gemäß DIN EN ISO 1798.
Die Druckverformungsreste DVR 50% und DVR 75% wurden bestimmt gemäß DIN EN ISO 1856-2001-03 bei 50% bzw. 75% Verformung.
Der Druckverformungsrest DVR 90%/22h/70°C wurde bestimmt gemäß DIN EN ISO 1856-2008 bei 90% Verformung

**OH-Zahl:**

Die Bestimmung der OH-Zahlen erfolgte gemäß der Vorschrift der DIN 53240.

**Viskosität:**

Die Viskositäten wurden mittels Rotationsviskosimeter (Physica MCR 51, Hersteller: Anton Paar) bei einer Scherrate von 5 $s^{-1}$ nach der Vorschrift der DIN 53018 ermittelt.

**GPC:**

Das Zahlenmittel $M_n$ und das Gewichtsmittel $M_w$ des Molekulargewichts sowie die Polydispersität ($M_w/M_n$) der Produkte wurde mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8×300 mm, 5 $\mu$m; RID-Detektor). Dabei wurden Polystyrolproben bekannter Molmasse zur Kalibrierung verwendet.

**Primäre OH-Gruppen:**

Bestimmung des molaren Anteils der primären OH-Gruppen: mittels $^1$H-NMR (Bruker DPX 400, Deuterochloroform):

Zur Bestimmung des Gehaltes an primären OH-Gruppen wurden die Polyol-Proben zunächst peracetyliert.

Dabei wurde folgendes Peracetylierungsgemisch angesetzt:

9,4 g Essigsäureanhydrid p.A.
1,6 g Essigsäure p.A.
100 ml Pyridin p.A.

Für die Peracetylierungsreaktion wurden 10 g Polyol (Polyethercarbonatpolyol oder Polyetherpolyol) in einen 300 ml-Schlifferlenmeyerkolben eingewogen. Das Volumen an Peracetylierungsgemisch richtete sich nach der OH-Zahl des

zu peracetylierenden Polyols, wobei (jeweils bezogen auf 10 g Polyol) die OH-Zahl des Polyols aufgerundet wird auf die nächste 10er-Stelle; Pro 10 mg KOH/g werden dann 10 ml an Peracetylierungsgemisch zugesetzt. Beispielsweise wurden der Probe von 10 g eines Polyols mit einer OH-Zahl = 45,1 mg KOH/g entsprechend 50 ml Peracetylierungsgemisch zugesetzt.

Nach der Zugabe von Siedeperlen aus Glas wurde der Schlifferlenmeyerkolben mit einem Steigrohr (Luftkühler) versehen und die Probe 75 min bei schwachem Rückfluss gekocht. Das Probengemisch wurde dann in einen 500 ml-Rundkolben überführt, und über einen Zeitraum von 30 min bei 80°C und 10 mbar (absolut) wurden flüchtige Bestandteile (im wesentlichen Pyridin, Essigsäure und überschüssiges Essigsäureanhydrid) abdestilliert. Der Destillationsrückstand wurde anschließend dreimal mit je 100 ml Cyclohexan (alternativ wurde Toluol eingesetzt in den Fällen, in denen sich der Destillationsrückstand in Cyclohexan nicht löste) versetzt und flüchtige Bestandteile jeweils bei 15 min bei 80 °C und 400 mbar (absolut) entfernt. Anschließend wurden flüchtige Bestandteile der Probe eine Stunde bei 100 °C und 10 mbar (absolut) entfernt.

Zur Bestimmung der molaren Anteile an primären und sekundären OH-Endgruppen im Polyol wurde die so vorbereitete Probe in deuteriertem Chloroform gelöst und mittels $^1$H-NMR (Firma Bruker, DPX 400, 400 MHz, Pulsprogramm zg30, Wartezeit d1: 10s, 64 Scans) untersucht. Die relevanten Resonanzen im $^1$H-NMR (bezogen auf TMS = 0 ppm) sind wie folgt:

Methylsignal einer peracetylierten sekundären OH-Endgruppe: 2,04 ppm

Methylsignal einer peracetylierten primären OH-Endgruppe: 2,07 ppm

Der molare Anteil der sekundären und primären OH-Endgruppen ergibt sich dann wie folgt:

$$\text{Anteil sekundärer OH-Endgruppen (CH-OH)} = F(2{,}04) / (F(2{,}04) + F(2{,}07)) * 100\,\% \qquad \text{(X)}$$

$$\text{Anteil primärer OH-Endgruppen (CH2-OH)} = F(2{,}07) / (F(2{,}04) + F(2{,}07)) * 100\,\% \qquad \text{(XI)}$$

In den Formeln (X) und (XI) steht F für Fläche der Resonanz bei 2,04 ppm bzw. 2,07 ppm.

**$CO_2$-Gehalt im Polyethercarbonatpolyol:**

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) mit Resonanz bei 4,5 ppm, Carbonat, resultierend aus im Polyethercarbonatpolyol eingebautem Kohlendioxid mit Resonanzen bei 5,1 bis 4,8 ppm, nicht abreagiertes PO mit Resonanz bei 2,4 ppm, Polyetherpolyol (d.h. ohne eingebautes Kohlendioxid) mit Resonanzen bei 1,2 bis 1,0 ppm, das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach Formel (XII) wie folgt berechnet, wobei folgende Abkürzungen verwendet werden:

F(4,5) = Fläche der Resonanz bei 4,5 ppm für cyclisches Carbonat (entspricht einem H Atom)

F(5,1-4,8) = Fläche der Resonanz bei 5,1-4,8 ppm für Polyethercarbonatpolyol und einem H-Atom für cyclisches Carbonat.

F(2,4) = Fläche der Resonanz bei 2,4 ppm für freies, nicht abreagiertes PO

F(1,2-1,0) = Fläche der Resonanz bei 1,2-1,0 ppm für Polyetherpolyol

F(1,6-1,52) = Fläche der Resonanz bei 1,6 bis 1,52 ppm für 1,8 Octandiol (Starter), soweit vorhanden

Unter Berücksichtigung der relativen Intensitäten wurde gemäß der folgenden Formel (XII) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad \text{(XII)}$$

Der Gewichtsanteil (in Gew.-%) polymer-gebundenen Carbonats (LC’) in der Reaktionsmischung wurde nach Formel (XIII) berechnet,

$$LC' = \frac{[F(5,1-4,8) - F(4,5)] * 102}{N} * 100\% \qquad (XIII)$$

wobei sich der Wert für N ("Nenner" N) nach Formel (XIV) berechnet:

$$N = [F(5,1-4,8) - F(4,5)] * 102 + F(4,5) * 102 + F(2,4) * 58 + 0,33 * F(1,2-1,0) * 58 + 0,25 * F(1,6-1,52) * 146 \qquad (XIV)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (XV) berechnet,

$$CC' = \frac{F(4,5) * 102}{N} * 100\% \qquad (XV)$$

wobei sich der Wert für N nach Formel (XIV) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Eingesetzte Rohstoffe:

Als DMC-Katalysator wurde bei allen Beispielen DMC-Katalysator hergestellt gemäß Beispiel 6 in WO 01/80994 A1 eingesetzt.

Cyclisches Propylencarbonat: Firma Acros

A. Herstellung von Vorstufen gemäß Schritt (i)

**Polyethercarbonatpolyol-Vorstufe A:**

In einem 50 Liter Druckreaktor mit Gasdosierungseinrichtung wurden 9,5 g DMC-Katalysator sowie 10680 g eines trifunktionellen Poly(oxypropylen)polyols mit OH-Zahl = 237 mg KOH/g als Starter vorgelegt. Der Reaktor wurde auf 130 °C aufgeheizt und durch dreimalige Evakuierung auf 200 mbar (absolut) und wiederholtes Beaufschlagen von Stickstoff inertisiert. In den Reaktor wurden bei 130 °C und Abwesenheit von $CO_2$ 1310 g Propylenoxid schnell eindosiert. Das Anspringen der Reaktion machte sich durch eine Temperaturspitze ("Hotspot") und durch Druckabfall auf etwa den Ausgangsdruck (ca. 1 bar) bemerkbar. Nach dem ersten Druckabfall wurden weitere 880 g PO und dann 740 g PO schnell eindosiert, wodurch es wiederum jeweils zu einer Temperaturspitze und zu einem Druckabfall kam. Nachdem der Reaktor mit 54 bar (absolut) $CO_2$ beaufschlagt worden war, wurden 1330 g PO schnell eindosiert, wodurch es wiederum zu einer Temperaturspitze kam. Gleichzeitig dazu fing der Druck an Kohlendioxid $CO_2$ zu fallen an. Der Druck wurde so geregelt, dass bei Absinken unter den Sollwert neues $CO_2$ zugegeben wurde. Erst danach wurde das restliche Propylenoxid (27360 g) kontinuierlich mit ca. 7.0 kg/h in den Reaktor gepumpt, während die Temperatur innerhalb von ca. 30 min auf 107 °C gesenkt wurde. Nach beendeter PO-Zugabe wurde noch ca. 60 Minuten bei Reaktionstemperatur und dem oben angegebenen Druck weitergerührt. Durch Dünnschichtverdampfung wurden abschließend leichtflüchtige

Bestandteile aus dem Produkt abgetrennt.

Produkteigenschaften:

| | |
|---|---|
| OH-Zahl: | 58,3 mg KOH / g |
| Viskosität (25°C): | 4020 mPas |
| CO2-Gehalt: | 14,0 Gew.-%. |

**Polyethercarbonatpolyol-Vorstufe B**:

In einem 50 Liter Druckreaktor mit Gasdosierungseinrichtung wurden 9,5 g DMC-Katalysator sowie 10680 g eines trifunktionellen Poly(oxypropylen)polyols mit OH-Zahl = 237 mg KOH/g als Starter vorgelegt. Der Reaktor wurde auf 130 °C aufgeheizt und durch dreimalige Evakuierung auf 200 mbar (absolut) und wiederholtes Beaufschlagen von Stickstoff inertisiert. In den Reaktor wurden bei 130 °C und Abwesenheit von $CO_2$ 1310 g Propylenoxid schnell eindosiert. Das Anspringen der Reaktion machte sich durch eine Temperaturspitze ("Hotspot") und durch Druckabfall auf etwa den Ausgangsdruck (ca. 1 bar) bemerkbar. Nach dem ersten Druckabfall wurden weitere 880 g PO schnell eindosiert, wodurch es wiederum jeweils zu einer Temperaturspitze und zu einem Druckabfall kam Nachdem der Reaktor mit 54 bar (absolut) $CO_2$ beaufschlagt worden war, wurden 1330 g PO schnell eindosiert, wodurch es wiederum zu einer Temperaturspitze kam. Gleichzeitig dazu fing der Druck an Kohlendioxid $CO_2$ zu fallen an. Der Druck wurde so geregelt, dass bei Absinken unter den Sollwert neues $CO_2$ zugegeben wurde. Erst danach wurde das restliche Propylenoxid (27360 g) kontinuierlich mit ca. 7.0 kg/h in den Reaktor gepumpt, während die Temperatur innerhalb von ca. 40 min auf 104 °C gesenkt wurde. Nach beendeter PO-Zugabe wurde noch ca. 60 Minuten bei Reaktionstemperatur und dem oben angegebenen Druck weitergerührt. Durch Dünnschichtverdampfung wurden abschließend leichtflüchtige Bestandteile aus dem Produkt abgetrennt.

Produkteigenschaften:

| | |
|---|---|
| OH-Zahl: | 56,4 mg KOH / g |
| Viskosität (25°C): | 7265 mPas |
| CO2-Gehalt: | 15,8 Gew.-%. |

**Polyetherpolyol-Vorstufe A:**

In einem 2 Liter-Edelstahldruckreaktor wurden 362 g eines trifunktionellen Poly(oxypropylen)polyols mit OH-Zahl = 237 mg KOH/g und 0,28 g DMC-Katalysator unter Stickstoff vorgelegt und dann auf 130°C aufgeheizt. Nach 30 min Stickstoff-Strippen bei 0,1 bar (absolut) wurde auf 105°C abgekühlt und bei dieser Temperatur unter Rühren (800 U/min) innerhalb von 110 min 1038 g Propylenoxid in den Reaktor dosiert. Nach einer Nachreaktion von 45 min wurden leicht flüchtige Anteile bei 90 °C für 30 Minuten im Vakuum abdestilliert und das Reaktionsgemisch anschließend auf Raumtemperatur abgekühlt.

Produkteigenschaften:

| | |
|---|---|
| OH-Zahl: | 57,9 mg KOH / g |
| Viskosität (25°C): | 553 mPas |

B. Umsetzung der Vorstufen gemäß den Schritten (ii) und (iii)

**Beispiel 1: Herstellung von Polyethercarbonatpolyol PECP-1 mit hohem Anteil primärer OH-Gruppen**

Schritt (ii)

In einem 2 Liter-Edelstahldruckreaktor wurden 660 g der Polyethercarbonatpolyol-Vorstufe A und 0,442 g DMC-Katalysator unter Stickstoff vorgelegt und auf 130°C temperiert. Zum Strippen wurde in das Reaktionsgemisch bei 130°C für eine Dauer von 30 min Stickstoff eingeleitet und gleichzeitig ein reduzierter Druck (absolut) angelegt, so dass sich im Edelstahldruckreaktor ein reduzierter Druck von 0,1 bar (absolut) einstellte. Anschließend wurde mit Stickstoff ein Reaktordruck von 2,8 bar (absolut) eingestellt.
Schritt (ii-1): Bei 130°C wurde dann unter Rühren (800 U/min) zunächst eine Mischung aus 39,6 g Ethylenoxid und 26,4 g Propylenoxid innerhalb von 15 min in den Reaktor dosiert.
Schritt (ii-2): Anschließend wurde bei 130°C unter Rühren (800 U/min) eine Mischung aus 52,8 g Ethylenoxid und 13,2 g Propylenoxid innerhalb von 15 min zudosiert.
Schritt (iii):
Abschließend wurden in den Edelstahldruckreaktor bei 130°C und 800 U/min noch 92,4 g Ethylenoxid innerhalb von 30 min dosiert, wobei der Druck im Reaktor am Ende der Dosierung bei 4,7 bar (absolut) lag. Nach einer Nachreaktion von 45 min wurden leicht flüchtige Anteile bei 90 °C für 30 Minuten unter vermindertem Druck bei 50 mbar (absolut) abdestilliert und das Reaktionsgemisch anschließend auf Raumtemperatur abgekühlt.

Produkteigenschaften:

| | |
|---|---|
| OH-Zahl: | 41,3 mg KOH / g |
| Polydispersität: | 1,14 |
| Primäre OH-Gruppen: | 65% |

**Vergleichsbeispiel 2: Herstellung von Polyetherpolyol PET-1 mit hohem Anteil primärer OH-Gruppen**

Vergleichsbeispiel 2 wurde in analoger Weise wie Beispiel 1 durchgeführt, mit der Ausnahme, dass Polyethercarbonatpolyol-Vorstufe A durch Polyetherpolyol-Vorstufe A ausgetauscht wurde.

Produkteigenschaften:

| | |
|---|---|
| OH-Zahl: | 42,8 mg KOH / g |
| Polydispersität: | 1,22 |
| Primäre OH: | 63 % |

**Beispiel 3: Herstellung von Polyethercarbonatpolyol PECP-2 mit hohem Anteil primärer OH-Gruppen in Gegenwart von cyclischem Propylencarbonat als Lösungsmittel** Schritt (ii)

In einem 2 Liter-Edelstahldruckreaktor wurden 400 g der Polyethercarbonatpolyol-Vorstufe A unter Stickstoff vorgelegt und auf 130°C temperiert. Zum Strippen wurde in das Reaktionsgemisch bei 130°C für eine Dauer von 30 min Stickstoff eingeleitet und gleichzeitig ein reduzierter Druck (absolut) angelegt, so dass sich im Edelstahldruckreaktor ein reduzierter Druck von 0,1 bar (absolut) einstellte. Anschließend wurden 26 g cyclisches Propylencarbonat zugegeben. Anschließend wurde der Druck im Edelstahldruckreaktor auf 0,1 bar (absolut) reduziert und dann mit 3,0 bar (absolut) Stickstoff beaufschlagt, und diese Sequenz des Evakuierens und DruckBeaufschlagung noch zweimal wiederholt. Dann wurde mit Stickstoff ein Reaktordruck von 3,0 bar (absolut) eingestellt.
Schritt (ii-1): Bei 130°C wurde dann unter Rühren (800 U/min) zunächst eine Mischung aus 22,3 g Ethylenoxid und 14,9 g Propylenoxid innerhalb von 10 min in den Reaktor dosiert.
Schritt (ii-2): Anschließend wurde bei 130°C unter Rühren (800 U/min) eine Mischung aus 29,7 g Ethylenoxid und 7,4 g Propylenoxid innerhalb von 10 min zudosiert.

Schritt (iii):
Abschließend wurden in den Edelstahldruckreaktor bei 130°C und 800 U/min noch 52,0 g Ethylenoxid innerhalb von 25 min dosiert, wobei der Druck im Reaktor am Ende der Dosierung bei 4,2 bar (absolut) lag. Nach einer Nachreaktion von 30 min wurden leicht flüchtige Anteile und Lösungsmittel bei 130 °C für 60 Minuten unter vermindertem Druck bei 50 mbar (absolut) abdestilliert und das Reaktionsgemisch anschließend auf Raumtemperatur abgekühlt.

Produkteigenschaften:

| | |
|---|---|
| OH-Zahl: | 42,1 mg KOH / g |
| Polydispersität: | 1,11 |
| Primäre OH: | 59 % |

**Vergleichsbeispiel 4: Herstellung von Polyetherpolyol PET-2 mit hohem Anteil primärer OH-Gruppen in Gegenwart von cyclischem Propylencarbonat als Lösungsmittel**

Vergleichsbeispiel 4 wurde in analoger Weise wie Beispiel 3 durchgeführt, mit der Ausnahme, dass Polyethercarbonatpolyol-Vorstufe A durch Polyetherpolyol-Vorstufe A ausgetauscht wurde.

Produkteigenschaften:

| | |
|---|---|
| OH-Zahl: | 41,0 mg KOH/g |
| Polydispersität: | 1,20 |
| Primäre OH: | 63% |

**Fazit:**

Ein Vergleich von Beispiel 1 mit Vergleichsbeispiel 2 sowie von Beispiel 3 mit Vergleichsbeispiel 4 zeigt, dass bei Einsatz einer Polyethercarbonatpolyol-Vorstufe engere Molmassenverteilungen (niedrigere Polydispersitäten) erhalten wurden als bei der Verwendung entsprechender Polyetherpolyol-Vorstufen.

**Beispiel 5: Herstellung von Polyethercarbonatpolyol PECP-3 mit primären OH-Gruppen in Gegenwart von cyclischem Propylencarbonat als Lösungsmittel**

Schritt (ii)
In einem 2 Liter-Edelstahldruckreaktor wurden 660 g der Polyethercarbonatpolyol-Vorstufe B unter Stickstoff vorgelegt und auf 130°C temperiert. Zum Strippen wurde in das Reaktionsgemisch bei 130°C für eine Dauer von 30 min Stickstoff eingeleitet und gleichzeitig ein reduzierter Druck (absolut) angelegt, so dass sich im Edelstahldruckreaktor ein reduzierter Druck von 0,1 bar (absolut) einstellte. Anschließend wurden 40 g cyclisches Propylencarbonat zugegeben. Anschließend wurde der Druck im Edelstahldruckreaktor auf 0,1 bar (absolut) reduziert und dann mit 3,0 bar (absolut) Stickstoff beaufschlagt, und diese Sequenz des Evakuierens und DruckBeaufschlagung noch zweimal wiederholt. Dann wurde mit Stickstoff ein Reaktordruck von 3,0 bar (absolut) eingestellt.
Schritt (ii-1): Bei 130°C wurde dann unter Rühren (800 U/min) zunächst eine Mischung aus 25,5 g Ethylenoxid und 17,0 g Propylenoxid innerhalb von 15 min in den Reaktor dosiert
Schritt (ii-2): Anschließend wurde bei 130°C unter Rühren (800 U/min) eine Mischung aus 33,9 g Ethylenoxid und 8,5 g Propylenoxid innerhalb von 15 min zudosiert.
Schritt (iii):
Abschließend wurden in den Edelstahldruckreaktor bei 130°C und 800 U/min noch 59,4 g Ethylenoxid innerhalb von 30 min dosiert, wobei der Druck im Reaktor am Ende der Dosierung bei 4,6 bar (absolut) lag. Nach einer Nachreaktion von 45 min wurden leicht flüchtige Anteile und Lösungsmittel bei 130 °C für 60 Minuten unter vermindertem Druck bei 50 mbar (absolut) abdestilliert und das Reaktionsgemisch anschließend auf Raumtemperatur abgekühlt.

Produkteigenschaften:

| | |
|---|---|
| OH-Zahl: | 43,2 mg KOH / g |
| Polydispersität: | 1,26 |
| Primäre OH: | 51 % |

C. Herstellung von Polyurethan-Weichschaumstoffen

C.1 Verwendete Materialien und Abkürzungen

Die verwendeten Materialien und Abkürzungen haben die folgende Bedeutung und Bezugsquellen: Tegostab® B 8681: Zubereitung organo-modifizierter Polysiloxane, Firma Evonik Goldschmidt. Tegostab® B 8715LF: Zubereitung organo-modifizierter Polysiloxane, Firma Evonik Goldschmidt.

PET-3: Polyetherpolyol mit einer OH-Zahl von ca. 28 mg KOH/g, hergestellt durch mittels KOH-katalysierter Addition von Propylenoxid und Ethylenoxid im Gewichtsverhältnis von 85 zu 15 unter Verwendung einer Mischung aus Glycerin und Sorbit als Starterverbindungen mit ca. 85 mol% primären OH-Gruppen und enthaltend 8,6 Gew.-% Füllstoff (Copolymer im Wesentlichen aufgebaut aus Styrol und Acrylnitril).
PET-4: Polyetherpolyol mit einer OH-Zahl von ca. 28 mg KOH/g, hergestellt mittels KOH-katalysierter Addition von Propylenoxid und Ethylenoxid im Gewichtsverhältnis von 85 zu 15 unter Verwendung von Glycerin als Starterverbindung mit ca. 85 mol% primären OH-Gruppen.
PET-5: Polyetherpolyol mit einer OH-Zahl von 37 mg KOH / g, hergestellt mittels KOH-katalysierter Addition von Propylenoxid und Ethylenoxid im Gewichtsverhältnis von 27 zu 73 unter Verwendung von Glycerin als Starterverbindung.
Amin 1: Amin-Katalysator (2,2,2-Diazabicyclooctan 33 Gew.-%ig in Dipropylenglykol).
Amin 2: Amin-Katalysator (Bis(dimethylaminoethyl)ether 70 Gew.-%ig in Dipropylenglykol).
Amin 3: N,N-bis(3-dimethylaminopropyl)-N-isopropanolamin.
Amin 4: Amin-Katalysator Dabco® NE 300, Fa. Air Products, Hamburg, Deutschland.
Urea-Lsg. (50%ig $H_2O$): Lösung von Harnstoff in Wasser (50 Gew.-% ig).
Sn-Kat: Zinn( II)-octoat
MDI 1: Mischung enthaltend 57 Gew.-% 4,4'-Diphenylmethandiisocyanat, 25 Gew.-% 2,4'-Diphenylmethandiisocyanat und 18 Gew.-% Polyphenylpolymethylenpolyisocyanat ("Mehrkern-MDI") mit einem NCO-Gehalt von 32,5 Gewichts-%.
TDI 1: Mischung aus 80 Gew.-% 2,4-Toluylendiisocyanat und 20 Gew.-% 2,6-Toluylendiisocyanat.

C.2 Polyurethan-Weichblockschaumstoffe

In für die Herstellung von Polyurethanschaumstoffen üblicher Verarbeitungsweise nach dem Einstufenverfahren wurden die in den Beispielen der nachfolgenden Tabelle 1 aufgeführten Einsatzstoffe miteinander zur Reaktion gebracht.

Die erhaltenen Polyurethan-Weichblockschaumstoffe wurden einer optischen Beurteilung unterzogen. Die Klassifikation der Polyurethan-Weichblockschaumstoffe ("Schaumbeurteilung") erfolgte anhand einer Skala von grob - mittel - fein. Hierbei bedeutet eine Einstufung "grob", dass der Schaumstoff weniger als ca. 5 Zellen pro cm aufweist. Eine Einstufung "mittel" bedeutet, dass der Schaumstoff mehr als ca. 5 Zellen pro cm aufweist und weniger als ca. 12 Zellen pro cm aufweist und eine Einstufung "fein" bedeutet, dass der Schaumstoff mehr als ca. 12 Zellen pro cm aufweist. Die Klassifikation der Schaumstoffqualität der Polyurethan-Weichblockschaumstoffe hinsichtlich der Zellstruktur erfolgte anhand einer Skala von schlecht - mittel - gut. Hierbei bedeutet eine Einstufung "schlecht", dass der Schaumstoff keine einheitliche Zellstruktur und/oder sichtbare Fehlstellen aufweist. Eine Einstufung "mittel" bedeutet, dass der Schaumstoff eine hauptsächlich einheitliche Zellstruktur mit nur wenigen sichtbaren Fehlstellen aufweist und eine Einstufung "gut" bedeutet, dass der Schaumstoff eine einheitliche Zellstruktur ohne sichtbare Fehlstellen aufweist.

Tabelle 1: Herstellung und Beurteilung der Polyurethan-Weichblockschaumstoffe

| Beispiel | | 6 *) (Null-versuch) | 7 | 8 *) | 9 | 10 *) | 11 |
|---|---|---|---|---|---|---|---|
| **Komponente A:** | | | | | | | |
| PET-3 | [Gew.-Tle] | 96,55 | 77,24 | 77,24 | 77,24 | 77,24 | 77,24 |
| PECP-1 (aus Bsp. 1) | [Gew.-Tle] | | 19,31 | -- | -- | -- | -- |
| PET-1 (aus Vglbsp. 2) | [Gew.-Tle] | | -- | 19,31 | -- | -- | -- |
| PECP-2 (aus Bsp. 3) | [Gew.-Tle] | | -- | -- | 19,31 | -- | -- |
| PET-2 (aus Vglbsp. 4) | [Gew.-Tle] | | -- | -- | -- | 19,31 | -- |
| PECP-3 (aus Bsp. 5) | [Gew.-Tle] | | -- | -- | -- | -- | 19,31 |
| Wasser (zugesetzt) | [Gew.-Tle] | 1,82 | 1,82 | 1,82 | 1,82 | 1,82 | 1,82 |
| Tegostab® B 8681 | [Gew.-Tle] | 0,39 | 0,39 | 0,39 | 0,39 | 0,39 | 0,39 |
| Amin 1 | [Gew.-Tle] | 0,16 | 0,16 | 0,16 | 0,16 | 0,16 | 0,16 |
| Amin 2 | [Gew.-Tle] | 0,05 | 0,05 | 0,05 | 0,05 | 0,05 | 0,05 |
| Urea-Lsg. (50%ig $H_2O$) | [Gew.-Tle] | 0,39 | 0,39 | 0,39 | 0,39 | 0,39 | 0,39 |
| Diethanolamin | [Gew.-Tle] | 0,48 | 0,48 | 0,48 | 0,48 | 0,48 | 0,48 |
| Sn-Kat | [Gew.-Tle] | 0,16 | 0,16 | 0,16 | 0,16 | 0,16 | 0,16 |
| **Komponente B:** | | | | | | | |
| TDI 1 | [MV] | 29,0 | 31,1 | 31,1 | 31,1 | 31,1 | 31,1 |
| Kennzahl | | 110 | 110 | 110 | 110 | 110 | 110 |
| **Ergebnis:** | | | | | | | |
| Startzeit | [ s ] | 10 | 10 | 10 | 10 | 10 | 11 |
| Steigzeit | [ s ] | 90 | 85 | kollabiert | 95 | kollabiert | 90 |
| Schaumbeurteilung | | Fein | fein | | fein | | fein |
| Zellstruktur | | Gut | gut | | gut | | gut |
| Rohdichte | [kg/m³] | 43,5 | 44,1 | | 42,9 | | 41,5 |
| Zugfestigkeit | [kPa] | 77 | 82 | | 75 | | 90 |
| Bruchdehnung | [%] | 96 | 86 | | 99 | | 114 |
| Stauchhärte | [kPa] | 4,6 | 5,1 | | 4,3 | | 4,0 |
| DVR 90%/22h/70°C | [%] | 4,2 | 8,3 | | 5,0 | | 4,8 |

Abkürzungen: *) = Vergleichsbeispiel, Gew.-Tle. = Gewichtsteile; MV = Gewichtsverhältnis der Komponente A zu Komponente B bei der angegebenen Kennzahl und bezogen auf 100 Gewichtsteile Komponente A.

Der erfindungsgemäße Polyurethan-Weichblockschaumstoff (Beispiel 7), in dem das Polyethercarbonatpolyol PECP-1 aus Beispiel 1 verarbeitet wurde, ließ sich mit einer gängigen HR-Schaumrezeptur gut verschäumen. Im Gegensatz dazu konnte man unter Verwendung des Polyetherpolyols PET-1 (Vergleichsbeispiel 8) keinen geeigneten Schaum herstellen. Der Schaum kollabierte.

Der erfindungsgemäße Polyurethan-Weichblockschaumstoff (Beispiel 9), in dem das Polyethercarbonatpolyol PECP-2 aus Beispiel 3 verarbeitet wurde, ließ sich mit einer gängigen HR-Schaumrezeptur gut verschäumen. Im Gegensatz dazu konnte man unter Verwendung des Polyetherpolyols PET-2 (Vergleichsbeispiel 10) keinen geeigneten Schaum herstellen. Der Schaum kollabierte.

Das Beispiel 11 lieferte unter Verwendung des Polyethercarbonatpolyols PECP-3 aus Beispiel 5 unter einwandfreier Verarbeitbarkeit einen Weichblockschaumstoff mit sehr gutem Eigenschaftsniveau.

Die Verarbeitbarkeit der erfindungsgemäßen Polyethercarbonatpolyole zu Weichblockschaumstoffen (Beispiele 7, 9 und 11) liegt auf einem guten Niveau: Beim anteiligen Austausch des Polyetherpolyols PET-3 gegen ein Polyethercarbonatpolyol (PECP-1, PECP-2 bzw. PECP-3) brauchen die weiteren Bestandteile der Polyolformulierung (Additive) in Art und/oder Menge nicht angepasst werden, um eine einwandfreie Verarbeitbarkeit zu erreichen, und die mechanischen Eigenschaften der resultierenden Weichblockschaumstoffe (Beispiele 7, 9 und 11) weisen ein mit dem Nullversuch (Vergleichsbeispiel 6) vergleichbares Niveau auf.

C.3 Polyurethan-Weichformschaumstoffe

In für die Herstellung von Polyurethan-Weichformschaumstoffen üblicher Verarbeitungsweise nach dem Einstufenverfahren wurden die in den Beispielen der in der nachfolgenden Tabelle 2 aufgeführten Einsatzstoffe miteinander zur Reaktion gebracht. Das Reaktionsgemisch wurde in eine auf 60°C geheizte Metallform des Volumens 9,7 L eingebracht und nach 5 min entformt. Die Einsatzmenge der Rohstoffe wurde so gewählt, dass eine berechnete Formteildichte von etwa 57 kg/m3 resultiert. In der Tabelle 2 angegeben ist die tatsächlich erhaltene Formteildichte, welche nach DIN EN ISO 3386-1-98 bestimmt wurde.

Tabelle 2: Herstellung und Beurteilung der Polyurethan-Weichformschaumstoffe

| | | 12 *) (Null-versuch) | 13 | 14 *) | 15 |
|---|---|---|---|---|---|
| **Komponente A** | | | | | |
| PET-4 | [Gew.-Tle] | 92,24 | 73,32 | 73,32 | 73,32 |
| PET-5 | [Gew.-Tle] | 2,37 | 2,37 | 2,37 | 2,37 |
| PECP-1 (aus Bsp. 1) | [Gew.-Tle] | | 18,92 | | |
| PET-1 (aus Vglbsp. 2) | [Gew.-Tle] | | | 18,92 | |
| PECP-3 (aus Bsp. 5) | [Gew.-Tle] | | | | 18,92 |
| Wasser (zugesetzt) | [Gew.-Tle] | 3,03 | 3,03 | 3,03 | 3,03 |
| Diethanolamin | [Gew.-Tle] | 0,95 | 0,95 | 0,95 | 0,95 |
| Tegostab B 8715 LF | [Gew.-Tle] | 0,95 | 0,95 | 0,95 | 0,95 |
| Amin 3 | [Gew.-Tle] | 0,39 | 0,39 | 0,39 | 0,39 |
| Amin 4 | [Gew.-Tle] | 0,09 | 0,09 | 0,09 | 0,09 |
| **Komponente B:** | | | | | |
| MDI 1 | [MV] | 56,19 | 56,94 | 56,94 | 57,16 |
| Kennzahl | | 100 | 100 | 100 | 100 |
| **Ergebnis** | | | | | |
| Rohdichte | [kg/m³] | 57,3 | 56,7 | kolabiert | 56,3 |
| Stauchhärte | [kPa] | 8,10 | 7,16 | | 7,85 |
| Zugfestigkeit | [kPa] | 148 | 150 | | 159 |
| Bruchdehnung | [%] | 90 | 102 | | 103 |
| DVR 50%/22h/70°C | [%] | 5,9 | 6,8 | | 7,1 |
| DVR 75%/22h/70°C | [%] | 7,8 | 8,8 | | 8,7 |

Abkürzungen: *) = Vergleichsbeispiel, Gew.-Tle. = Gewichtsteile; MV = Gewichtsverhältnis der Komponente A zu Komponente B bei der angegebenen Kennzahl und bezogen auf 100 Gewichtsteile Komponente A.

Die erfindungsgemäßen Polyethercarbonatpolyole ließen sich problemlos zu Polyurethan-Weichformschaumstoffen verarbeiten im Gegensatz zum Vergleichsbeispiel 14, welches bei der Verarbeitung zum Weichformschaumstoff zu einem Kollaps führte. Die erfindungsgemäßen Polyurethan-Weichformschaumstoffe aus den Beispielen 13 und 15 weisen ein gutes Eigenschaftsniveau auf.
Die Verarbeitbarkeit der erfindungsgemäßen Polyethercarbonatpolyole zu Polyurethan-Weichformschaumstoffen (Beispiele 13 und 15) liegt auf einem guten Niveau: Beim anteiligen Austausch von Polyetherpolyol (hier: Mischung aus PET-4 und PET-5) gegen ein Polyethercarbonatpolyol (PECP-1 bzw. PECP-3) brauchen die weiteren Bestandteile der Polyolformulierung (Additive) in Art und/oder Menge nicht angepasst werden, um eine einwandfreie Verarbeitbarkeit zu erreichen, und die mechanischen Eigenschaften der resultierenden Weichformschaumstoffe (Beispiele 13 und 15) weisen ein mit dem Nullversuch (Vergleichsbeispiel 12) vergleichbares Niveau auf.

## Patentansprüche

1. Verfahren zur Herstellung von Polyethercarbonatpolyolen, **dadurch gekennzeichnet, dass**

   (i) in einem ersten Schritt an einer oder mehreren H-funktionellen Startsubstanz(en) in Gegenwart mindestens eines DMC-Katalysators

      (a)Kohlendioxid und Propylenoxid

   angelagert werden,
   (ii) in einem zweiten Schritt das aus Schritt (i) erhaltene Reaktionsgemisch

      (ii-1) zunächst mit einer Mischung enthaltend Propylenoxid (PO) und Ethylenoxid (EO) in einem Gewichtsverhältnis PO/EO von 90/10 bis 20/80 in Gegenwart mindestens eines DMC-Katalysators kettenverlängert wird,
      (ii-2) dann das resultierende Gemisch mit einer Mischung enthaltend Propylenoxid (PO) und Ethylenoxid (EO) in einem Gewichtsverhältnis PO/EO von 60/40 bis 2/98 in Gegenwart mindestens eines DMC-Katalysators kettenverlängert wird, und

   (iii) das aus Schritt (ii) resultierende Polyethercarbonatpolyol mit Ethylenoxid oder einer Mischung aus Propylenoxid (PO) und Ethylenoxid (EO) in einem Gewichtsverhältnis PO/EO von 5/95 bis 0,1/99,9 in Gegenwart mindestens eines DMC-Katalysators kettenverlängert wird,

   wobei in Schritt (ii-2) der Gewichtsanteil des EO in der Mischung enthaltend PO und EO höher ist als der Gewichtsanteil des EO in der Mischung enthaltend PO und EO in Schritt (ii-1) .

2. Verfahren gemäß Anspruch 1, **dadurch gekennzeichnet, dass** im ersten Schritt (i)

   (α) die H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen oder dem Suspensionsmittel vor oder nach der Trocknung zugesetzt wird,
   (β) zur Aktivierung eine Teilmenge (bezogen auf die Gesamtmenge der bei der Aktivierung und Copolymerisation eingesetzten Menge an Alkylenoxiden) an
   Propylenoxid
   zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
   (γ) Propylenoxid, Kohlendioxid und gegebenenfalls eine oder mehrere H-funktionelle Startersubstanz(en) zu der aus Schritt (β) resultierenden Mischung zugesetzt werden, wobei wenigstens in einem der Schritte (α) oder (γ) mindestens eine H-funktionelle Startersubstanz zugesetzt wird.

3. Verfahren gemäß Anspruch 1 oder 2, **dadurch gekennzeichnet, dass** im Schritt (i) als H-funktionelle Startersubstanzen eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3 eingesetzt werden.

**4.** Verfahren gemäß einem der Ansprüche 1 bis 3, wobei das aus Schritt (i) erhaltene Reaktionsgemisch

(ii-1) zunächst mit einer Mischung enthaltend Propylenoxid (PO) und Ethylenoxid (EO) in einem Gewichtsverhältnis PO/EO von 80/20 bis 30/70 in Gegenwart mindestens eines DMC-Katalysators kettenverlängert wird, und
(ii-2) dann das resultierende Gemisch mit einer Mischung enthaltend Propylenoxid (PO) und Ethylenoxid (EO) in einem Gewichtsverhältnis PO/EO von 40/60 bis 5/95 in Gegenwart mindestens eines DMC-Katalysators kettenverlängert wird.

**5.** Verfahren gemäß einem der Ansprüche 1 bis 4, wobei als Suspensionsmittel 4-Methyl-2-oxo-1,3-dioxolan, 1,3-Dioxolan-2-on, Toluol, Xylol, Ethylbenzol, Chlorbenzol, Dichlorbenzol oder eine Mischung zweier oder mehrerer dieser Suspensionsmittel eingesetzt wird.

**6.** Verfahren gemäß einem der Ansprüche 1 bis 5, wobei die Schritte (ii-1) und/oder (ii-2) zwei- bis zehnmal wiederholt werden.

**7.** Verfahren gemäß Anspruch 6, wobei bei jeder Wiederholung der Schritte (ii-1) und/oder (ii-2) der Gewichtsanteil des EO zunimmt.

**8.** Verfahren gemäß einem der Ansprüche 1 bis 5, **dadurch gekennzeichnet, dass** der Gewichtsanteil des EO in der Mischung aus PO und EO zwischen einem Anfangsmischungsverhältnis PO/EO und einem Endmischungsverhältnis PO/EO kontinuierlich gesteigert wird, wobei das Anfangsmischungsverhältnis PO/EO einem Gewichtsverhältnis PO/EO aus dem für Schritt (ii-1) definierten Gewichtsverhältnis entspricht, und das Endmischungsverhältnis PO/EO einem Gewichtsverhältnis PO/EO aus dem für Schritt (ii-2) definierten Gewichtsverhältnis entspricht.

**9.** Verfahren gemäß einem der Ansprüche 1 bis 8, **dadurch gekennzeichnet, dass** die mittlere Länge der gemäß Schritt (ii-1) bzw. (ii-2) hergestellten Mischblöcke aus PO und EO 1,0 bis 20,0 Alkylenoxid-Einheiten, jeweils bezogen auf eine OH-Gruppe des Polyethercarbonatpolyols, beträgt.

**10.** Verfahren gemäß einem der Ansprüche 1 bis 9, **dadurch gekennzeichnet, dass** zur Durchführung des Schrittes (ii) dem aus Schritt (i) erhaltenen Reaktionsgemisch ein Lösungsmittel, das keine H-funktionellen Gruppen enthält, zugesetzt wird.

**11.** Verfahren gemäß einem der Ansprüche 1 bis 10, **dadurch gekennzeichnet, dass** die mittlere Länge eines gemäß Schritt (iii) hergestellten Alkylenoxidblocks 1 bis 30 Alkylenoxid-Einheiten, jeweils bezogen auf eine OH-Gruppe des Polyethercarbonatpolyols, beträgt.

**12.** Polyethercarbonatpolyol erhältlich gemäß einem der Ansprüche 1 bis 11.

**13.** Verfahren zur Herstellung von Polyurethan-Weichschaumstoffen, wobei eine Polyolkomponente (Komponente A) eingesetzt wird, die ein Polyethercarbonatpolyol erhältlich gemäß einem der Ansprüche 1 bis 11 enthält.

**14.** Verfahren zur Herstellung von Polyurethan-Weichschaumstoffen mit einer Rohdichte gemäß DIN EN ISO 3386-1-98 im Bereich von $\geq$ 10 kg/m$^3$ bis $\leq$ 150 kg/m$^3$ und einer Stauchhärte gemäß DIN EN ISO 3386-1-98 im Bereich von $\geq$ 0,5 kPa bis $\leq$ 20 kPa (bei 40% Verformung und 4. Zyklus) durch Umsetzung von
Komponente A enthaltend

A1 100 bis 10 Gew.-Teile (bezogen auf die Summe der Gew.-Teile der Komponenten A1 und A2) Polyethercarbonatpolyol erhältlich gemäß einem der Ansprüche 1 bis 11,
A2 0 bis 90 Gew.-Teile (bezogen auf die Summe der Gew.-Teile der Komponenten A1 und A2) konventionelles Polyetherpolyol,
A3 0,5 bis 25 Gew.-Teile (bezogen auf die Summe der Gew.-Teile der Komponenten A1 und A2) Wasser und/oder physikalische Treibmittel,
A4 0,05 bis 10 Gew.-Teile (bezogen auf die Summe der Gew.-Teile der Komponenten A1 und A2) Hilfs- und Zusatzstoffe wie

a) Katalysatoren,
b) oberflächenaktive Zusatzstoffe,
c) Pigmente oder Flammschutzmittel,

A5 0 bis 10 Gew.-Teile (bezogen auf die Summe der Gew.-Teile der Komponenten A1 und A2) gegenüber Isocyanaten reaktionsfähigen Wasserstoffatomen aufweisenden Verbindungen mit einem Molekulargewicht von 62 - 399,

mit Komponente B enthaltend Polyisocyanate, wobei die Herstellung bei einer Kennzahl von 50 bis 250 erfolgt, und wobei die Gewichtsteilangaben der Komponenten A1 bis A5 so normiert sind, dass die Summe der Gewichtsteile der Komponenten A1+A2 in der Zusammensetzung 100 ergibt.

**15.** Polyurethan-Weichschaumstoffe mit einer Rohdichte gemäß DIN EN ISO 3386-1-98 im Bereich von ≥ 10 kg/$m^3$ bis ≤ 150 kg/$m^3$ und einer Stauchhärte gemäß DIN EN ISO 3386-1-98 im Bereich von ≥ 0,5 kPa bis ≤ 20 kPa (bei 40% Verformung und 4. Zyklus) erhältlich nach einem Verfahren gemäß einem der Ansprüche 13 bis 14.

## Claims

**1.** Process for preparing polyether carbonate polyols, **characterized in that**

(i) in a first step

(a) carbon dioxide and propylene oxide are added onto one or more H-functional starter substance (s) in the presence of at least one DMC catalyst,

(ii) in a second step the reaction mixture obtained from step (i)

(ii-1) is first chain-extended with a mixture comprising propylene oxide (PO) and ethylene oxide (EO) in a PO/EO weight ratio of 90/10 to 20/80 in the presence of at least one DMC catalyst,
(ii-2) then the resulting mixture is chain-extended with a mixture comprising propylene oxide (PO) and ethylene oxide (EO) in a PO/EO weight ratio of 60/40 to 2/98 in the presence of at least one DMC catalyst, and

(iii) the polyether carbonate polyol resulting from step (ii) is chain-extended with ethylene oxide or a mixture of propylene oxide (PO) and ethylene oxide (EO) in a PO/EO weight ratio of 5/95 to 0.1/99.9 in the presence of at least one DMC catalyst,

where the proportion by weight of EO in the mixture comprising PO and EO in step (ii-2) is higher than the proportion by weight of EO in the mixture comprising PO and EO in step (ii-1).

**2.** Process according to Claim 1, **characterized in that**, in the first step (i),

(α) the H-functional starter substance or a mixture of at least two H-functional starter substances or a suspension medium is initially charged and any water and/or other volatile compounds are removed by elevated temperature and/or reduced pressure ("drying"), with addition of the DMC catalyst to the H-functional starter substance or to the mixture of at least two H-functional starter substances or to the suspension medium before or after the drying,
(β) activation is accomplished by adding a portion (based on the total amount of the amount of alkylene oxides used in the activation and copolymerization) of propylene oxide to the mixture resulting from step (α), it being possible for this addition of a portion of alkylene oxide to be effected in the optional presence of $CO_2$, in which case the temperature peak ("hotspot") which occurs because of the exothermic chemical reaction that follows and/or a pressure drop in the reactor are/is respectively awaited, and where step (β) for activation can also be effected repeatedly,
(γ) propylene oxide, carbon dioxide and optionally one or more H-functional starter substance(s) are added to the mixture resulting from step (β),

where at least one H-functional starter substance is added in at least one of steps (α) and (γ).

3. Process according to Claim 1 or 2, **characterized in that** H-functional starter substances used in step (i) are one or more compounds selected from the group consisting of ethylene glycol, propylene glycol, propane-1,3-diol, butane-1,3-diol, butane-1,4-diol, pentane-1,5-diol, 2-methylpropane-1,3-diol, neopentyl glycol, hexane-1,6-diol, octane-1,8-diol, diethylene glycol, dipropylene glycol, glycerol, trimethylolpropane, pentaerythritol, sorbitol and polyether polyols having a molecular weight Mn in the range from 150 to 4500 g/mol and a functionality of 2 to 3.

4. Process according to any of Claims 1 to 3, wherein the reaction mixture obtained from step (i)

   (ii-1) is first chain-extended with a mixture comprising propylene oxide (PO) and ethylene oxide (EO) in a PO/EO weight ratio of 80/20 to 30/70 in the presence of at least one DMC catalyst, and
   (ii-2) then the resulting mixture is chain-extended with a mixture comprising propylene oxide (PO) and ethylene oxide (EO) in a PO/EO weight ratio of 40/60 to 5/95 in the presence of at least one DMC catalyst.

5. Process according to any of Claims 1 to 4, wherein the suspension media used is 4-methyl-2-oxo-1,3-dioxolane, 1,3-dioxolan-2-one, toluene, xylene, ethylbenzene, chlorobenzene, dichlorobenzene or a mixture of two or more of these suspension media.

6. Process according to any of Claims 1 to 5, wherein steps (ii-1) and/or (ii-2) are repeated two to ten times.

7. Process according to Claim 6, wherein the proportion by weight of EO increases on each repetition of steps (ii-1) and/or (ii-2).

8. Process according to any of Claims 1 to 5, **characterized in that** the proportion by weight of EO in the mixture of PO and EO is increased continuously between a starting PO/EO mixing ratio and a final PO/EO mixing ratio, the starting PO/EO mixing ratio corresponding to a PO/EO weight ratio from the weight ratio defined for step (ii-1), and the final PO/EO mixing ratio corresponding to a PO/EO weight ratio from the weight ratio defined for step (ii-2).

9. Process according to any of Claims 1 to 8, **characterized in that** the mean length of the mixed blocks of PO and EO prepared in step (ii-1) or (ii-2) is 1.0 to 20.0 alkylene oxide units, based in each case on one OH group of the polyether carbonate polyol.

10. Process according to any of Claims 1 to 9, **characterized in that** step (ii) is performed by adding a solvent not containing any H-functional groups to the reaction mixture obtained from step (i).

11. Process according to any of Claims 1 to 10, **characterized in that** the mean length of an alkylene oxide block prepared in step (iii) is 1 to 30 alkylene oxide units, based in each case on one OH group of the polyether carbonate polyol.

12. Polyether carbonate polyol obtainable according to any of Claims 1 to 11.

13. Process for producing flexible polyurethane foams, wherein a polyol component (component A) comprising a polyether carbonate polyol obtainable according to any of Claims 1 to 11 is used.

14. Process for producing flexible polyurethane foams having an apparent density to DIN EN ISO 3386-1-98 in the range from ≥ 10 kg/$m^3$ to ≤ 150 kg/$m^3$ and an indentation hardness to DIN EN ISO 3386-1-98 in the range from ≥ 0.5 kPa to ≤ 20 kPa (at 40% deformation and 4th cycle) by reaction of
   component A comprising

   A1 100 to 10 parts by weight (based on the sum total of the parts by weight of components A1 and A2) of polyether carbonate polyol obtainable according to any of Claims 1 to 11,
   A2 0 to 90 parts by weight (based on the sum total of the parts by weight of components A1 and A2) of conventional polyether polyol,
   A3 0.5 to 25 parts by weight (based on the sum total of the parts by weight of components A1 and A2) of water and/or physical blowing agents,
   A4 0.05 to 10 parts by weight (based on the sum total of the parts by weight of components A1 and A2) of auxiliaries and additives such as

      a) catalysts,

b) surface-active additives,
c) pigments or flame retardants,

A5 0 to 10 parts by weight (based on the sum total of the parts by weight of components A1 and A2) of compounds having hydrogen atoms reactive toward isocyanates and having a molecular weight of 62-399,

with component B comprising polyisocyanates,
where the preparation is effected at an index of 50 to 250, and where the stated parts by weight of components A1 to A5 are normalized such that the sum total of the parts by weight of components A1 + A2 in the composition adds up to 100.

**15.** Flexible polyurethane foams having an apparent density to DIN EN ISO 3386-1-98 in the range from ≥ 10 $kg/m^3$ to ≤ 150 $kg/m^3$ and an indentation hardness to DIN EN ISO 3386-1-98 in the range from ≥ 0.5 kPa to ≤ 20 kPa (at 40% deformation and 4th cycle) obtainable by a process according to either of Claims 13 and 14.

## Revendications

**1.** Procédé de fabrication de polyéther-carbonate-polyols, **caractérisé en ce que**

(i) lors d’une première étape,

(a) du dioxyde de carbone et de l’oxyde de propylène
sont ajoutés sur une ou plusieurs substances de départ à fonction H en présence d’au moins un catalyseur DMC,

(ii) lors d’une deuxième étape, le mélange réactionnel obtenu à l’étape (i)

(ii-1) est tout d’abord soumis à un allongement de chaîne avec un mélange contenant de l’oxyde de propylène (PO) et de l’oxyde d’éthylène (EO) en un rapport en poids PO/EO de 90/10 à 20/80 en présence d’au moins un catalyseur DMC, puis
(ii-2) le mélange résultant est soumis à un allongement de chaîne avec un mélange contenant de l’oxyde de propylène (PO) et de l’oxyde d’éthylène (EO) en un rapport en poids PO/EO de 60/40 à 2/98 en présence d’au moins un catalyseur DMC, et

(iii) le polyéther-carbonate-polyol résultant de l’étape (ii) est soumis à un allongement de chaîne avec de l’oxyde d’éthylène ou un mélange d’oxyde de propylène (PO) et d’oxyde d’éthylène (EO) en un rapport en poids PO/EO de 5/95 à 0,1/99,9 en présence d’au moins un catalyseur DMC,

la proportion en poids d’EO dans le mélange contenant PO et EO à l’étape (ii-2) étant supérieure à la proportion en poids d’EO dans le mélange contenant PO et EO à l’étape (ii-1).

**2.** Procédé selon la revendication 1, **caractérisé en ce que**, lors de la première étape (i),

(α) la substance de départ à fonction H ou un mélange d’au moins deux substances de départ à fonction H ou un agent de suspension est chargé initialement, et de l’eau et/ou d’autres composés volatils sont éventuellement éliminés par une température élevée et/ou une pression réduite (« séchage »), le catalyseur DMC étant ajouté à la substance de départ à fonction H ou au mélange d’au moins deux substances de départ à fonction H ou à l’agent de suspension avant ou après le séchage,
(β) pour l’activation, une quantité partielle (par rapport à la quantité totale d’oxydes d’alkylène utilisée lors de l’activation et de la copolymérisation) d’oxyde de propylène est ajoutée au mélange résultant de l’étape (a), cet ajout d’une quantité partielle d’oxyde d’alkylène pouvant éventuellement avoir lieu en présence de $CO_2$, puis le pic de température (« point chaud ») qui se produit en raison de la réaction chimique exothermique suivante et/ou une chute de pression dans le réacteur étant respectivement attendus, et l’étape (β) pour l’activation pouvant également avoir lieu à plusieurs reprises,
(γ) de l’oxyde de propylène, du dioxyde de carbone et éventuellement une ou plusieurs substances de départ à fonction H sont ajoutés au mélange résultant de l’étape (β),

au moins une substance de départ à fonction H étant ajoutée au moins lors d'une des étapes (α) ou (γ).

3. Procédé selon la revendication 1 ou 2, **caractérisé en ce qu'**une ou plusieurs composés choisis dans le groupe constitué par l'éthylène glycol, le propylène glycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylène glycol, le dipropylène glycol, la glycérine, le triméthylolpropane, la pentaérythrite, le sorbitol et les polyéther-polyols ayant un poids moléculaire Mn dans la plage allant de 150 à 4 500 g/mol et une fonctionnalité de 2 à 3, sont utilisés à l'étape (i) en tant que substances de départ à fonction H.

4. Procédé selon l'une quelconque des revendications 1 à 3, dans lequel le mélange réactionnel obtenu à l'étape (i)

(ii-1) est tout d'abord soumis à un allongement de chaîne avec un mélange contenant de l'oxyde de propylène (PO) et de l'oxyde d'éthylène (EO) en un rapport en poids PO/EO de 80/20 à 30/70 en présence d'au moins un catalyseur DMC, puis
(ii-2) le mélange résultant est soumis à un allongement de chaîne avec un mélange contenant de l'oxyde de propylène (PO) et de l'oxyde d'éthylène (EO) en un rapport en poids PO/EO de 40/60 à 5/95 en présence d'au moins un catalyseur DMC.

5. Procédé selon l'une quelconque des revendications 1 à 4, dans lequel du 4-méthyl-2-oxo-1,3-dioxolane, de la 1,3-dioxolan-2-one, du toluène, du xylène, de l'éthylbenzène, du chlorobenzène, du dichlorobenzène ou un mélange de deux ou plus de ces agents de suspension est utilisé en tant qu'agent de suspension.

6. Procédé selon l'une quelconque des revendications 1 à 5, dans lequel les étapes (ii-1) et/ou (ii-2) sont répétées deux à dix fois.

7. Procédé selon la revendication 6, dans lequel la proportion en poids d'EO augmente à chaque répétition des étapes (ii-1) et/ou (ii-2).

8. Procédé selon l'une quelconque des revendications 1 à 5, **caractérisé en ce que** la proportion en poids d'EO dans le mélange de PO et d'EO est augmentée en continu entre un rapport de mélange initial PO/EO et un rapport de mélange final PO/EO, le rapport de mélange initial PO/EO correspondant à un rapport de mélange PO/EO qui provient du rapport en poids défini pour l'étape (ii-1) et le rapport de mélange final PO/EO correspondant à un rapport en poids PO/EO qui provient du rapport en poids défini pour l'étape (ii-2).

9. Procédé selon l'une quelconque des revendications 1 à 8, **caractérisé en ce que** la longueur moyenne des séquences mixtes de PO et d'EO fabriquées selon l'étape (ii-1) ou (ii-2) est de 1,0 à 20,0 unités oxyde d'alkylène, à chaque fois par rapport à un groupe OH du polyéther-carbonate-polyol.

10. Procédé selon l'une quelconque des revendications 1 à 9, **caractérisé en ce que**, pour la réalisation de l'étape (ii), un solvant qui ne contient pas de groupes à fonction H est ajouté au mélange réactionnel obtenu à l'étape (i).

11. Procédé selon l'une quelconque des revendications 1 à 10, **caractérisé en ce que** la longueur moyenne d'une séquence oxyde d'alkylène fabriquée selon l'étape (iii) est de 1 à 30 unités oxyde d'alkylène, à chaque fois par rapport à un groupe OH du polyéther-carbonate-polyol.

12. Polyéther-carbonate-polyol pouvant être obtenu selon l'une quelconque des revendications 1 à 11.

13. Procédé de fabrication de mousses souples de polyuréthane, selon lequel un composant polyol (composant A) est utilisé, qui contient un polyéther-carbonate-polyol pouvant être obtenu selon l'une quelconque des revendications 1 à 11.

14. Procédé de fabrication de mousses souples de polyuréthane ayant une densité brute selon DIN EN ISO 3386-1-98 dans la plage allant de ≥ 10 kg/$m^3$ à ≤ 150 kg/$m^3$ et une dureté sous compression selon DIN EN ISO 3386-1-98 dans la plage allant de ≥ 0,5 kPa à ≤ 20 kPa (à une déformation de 40 % et 4 cycles), par mise en réaction d'un composant A contenant

A1 100 à 10 parties en poids (par rapport à la somme des parties en poids des composants A1 et A2) d'un polyéther-carbonate-polyol pouvant être obtenu selon l'une quelconque des revendications 1 à 11,

A2 0 à 90 parties en poids (par rapport à la somme des parties en poids des composants A1 et A2) d'un polyéther-polyol classique,
A3 0,5 à 25 parties en poids (par rapport à la somme des parties en poids des composants A1 et A2) d'eau et/ou d'agents gonflants physiques,
A4 0,05 à 10 parties en poids (par rapport à la somme des parties en poids des composants A1 et A2) d'adjuvants et d'additifs, tels que

a) des catalyseurs,
b) des additifs tensioactifs,
c) des pigments ou des agents ignifuges,

A5 0 à 10 parties en poids (par rapport à la somme des parties en poids des composants A1 et A2) de composés comprenant des atomes d'hydrogène réactifs avec les isocyanates ayant un poids moléculaire de 62 à 399,

avec un composant B contenant des polyisocyanates,
la fabrication ayant lieu à un indice caractéristique de 50 à 250, et les données de parties en poids des composants A1 à A5 étant normées de sorte que la somme des parties en poids des composants A1+A2 dans la composition soit de 100.

**15.** Mousses souples de polyuréthane ayant une densité brute selon DIN EN ISO 3386-1-98 dans la plage allant de ≥ 10 kg/$m^3$ à ≤ 150 kg/$m^3$ et une dureté sous compression selon DIN EN ISO 3386-1-98 dans la plage allant de ≥ 0,5 kPa à ≤ 20 kPa (à une déformation de 40 % et 4 cycles), pouvant être obtenues par un procédé selon l'une quelconque des revendications 13 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004111107 A
- WO 2001044347 A
- WO 2008058913 A
- WO 2006103214 A1
- WO 2012130760 A1
- EP 11168433
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- EP 0000389 A
- EP 0176013 A
- EP 0007502 A
- EP 355000 A
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- Kunststoff-Handbuch. Carl-Hanser-Verlag, 1993, vol. VII, 104-127
- **W. SIEFKEN.** Justus Liebigs Annalen der Chemie. vol. 562, 75-136
- Kunststoff-Handbuch. Carl-Hanser-Verlag, 1993, vol. VII, 139-265